# EUROPÄISCHE PATENTSCHRIFT

(11) **EP 1 914 144 B1**
(45) Veröffentlichungstag und Bekanntmachung des Hinweises auf die Patenterteilung: **12.08.2009**
(21) Anmeldenummer: 06124641.9
(22) Anmeldetag: 23.11.2006
(51) Int. Cl.: B61G 11/16, F16F 7/12

(54) **Energieverzehrvorrichtung für mehrgliedrige Fahrzeuge**
Energy absorbing element for multiple unit vehicles
Dispositif d'absorption d'énergie pour véhicule composé de plusieurs unités

(30) Priorität: 19.10.2006 EP 06122601
(43) Veröffentlichungstag der Anmeldung: 23.04.2008
(73) Patentinhaber: Voith Turbo Scharfenberg GmbH & Co. KG, 38239 Salzgitter-Watenstedt (DE)
(72) Erfinder:
(74) Vertreter: Rupprecht, Kay

(56) Entgegenhaltungen:
- EP-A- 1 209 039
- WO-A-20/04106769
- DE-A1- 19 833 250
- DE-A1-7102004 045 73
- US-A1- 2001 039 822
- US-B1- 6 196 135

## Beschreibung

Die vorliegende Erfindung betrifft eine Energieverzehrvorrichtung für mehrgliedrige Fahrzeuge, insbesondere Schienenfahrzeuge, mit einem ersten Kraftübertragungselement, einem zweiten Kraftübertragungselement und einem Energieverzehrelement, welches einen Verbindungskörper in Gestalt eines sich in Längsrichtung der Energieverzehrvorrichtung erstreckenden Hohlkörpers aufweist, wobei die Kraftübertragungselemente mit Hilfe des Energieverzehrelements derart kraftschlüssig miteinander verbunden sind, dass Zug-und Stoßkräfte in Längsrichtung der Energieverzehrvorrichtung übertragbar sind, indem der bei der Übertragung der Kräfte stattfindende Kraftfluss vollständig über den Verbindungskörper läuft, wobei das Energieverzehrelement derart ausgelegt ist, dass bis zu einem durch den Kraftfluss über den Verbindungskörper übertragenen festlegbaren Energiebetrag die Kraftübertragungselemente im wesentlichen starr zueinander sind, und dass bei Überschreiten des durch den Kraftfluss über den Verbindungskörper übertragenen festlegbaren Energiebetrags die Kraftübertragungselemente relativ zueinander in Längsrichtung der Energieverzehrvorrichtung verschoben werden, wobei zumindest ein Teil des übertragenen Energiebetrages von dem Energieverzehrelement absorbiert und abgebaut wird.

Derartige Energieverzehrvorrichtungen sind im Prinzip allgemein aus dem Stand der Technik bekannt und werden beispielsweise in der Schienenfahrzeugtechnik als Stoßsicherung eingesetzt. In der Regel besteht eine solche Stoßsicherung aus einer Kombination einer Zug-/Stoßeinrichtung (Federapparat) und einer Energieverzehrvorrichtung, wobei die Stoßsicherung das Fahrzeug insbesondere auch bei größeren Auffahrgeschwindigkeiten schützt. Dabei ist beispielsweise vorgesehen, dass die Zug-/Stoßeinrichtung Zug- und Stoßkräfte bis zu einer definierten Größe aufnimmt und darüber hinausgehende Kräfte in das Fahrzeuguntergestell weiterleitet. Dadurch werden zwar Zug- und Stoßkräfte, welche während des normalen Fahrbetriebs, die beispielsweise bei einem mehrgliedrigen Fahrzeug zwischen einzelnen Wagenkästen auftreten, in dieser in der Regel regenerativ ausgebildeten Stoßsicherung absorbiert; bei Überschreiten der Betriebslast der Zug-/Stoßeinrichtung hingegen, etwa beim Aufprall des Fahrzeuges auf ein Hindernis oder bei einem abrupten Abbremsen des Fahrzeuges, wird die regenerativ ausgebildete Zug-/Stoßeinrichtung und die ggf. vorgesehene Gelenk- oder Kupplungsverbindung zwischen den einzelnen Wagenkästen bzw. die Schnittstelle zwischen den einzelnen Wagenkästen möglicherweise zerstört oder beschädigt. In jedem Fall reicht die Zug-/Stoßeinrichtung nicht für einen Verzehr der insgesamt anfallenden Energie aus. Dadurch ist die Stoßsicherung dann nicht in dem Energieverzehrkonzept des Gesamtfahrzeuges eingebunden, so dass die anfallende Stoßenergie direkt auf das Fahrzeuguntergestell übertragen wird. Dabei wird dieses extremen Belastungen ausgesetzt und unter Umständen beschädigt oder gar zerstört. Bei Schienenfahrzeugen läuft in solch einem Fall der Wagenkasten Gefahr zu entgleisen.

Mit dem Ziel, das Fahrzeuguntergestell gegen Beschädigungen bei starken Auffahrstößen zu schützen, kommt häufig ein destruktiv oder regenerativ ausgebildetes Energieverzehrelement zum Einsatz, welches beispielsweise derart ausgelegt ist, dass es nach Ausschöpfung des Arbeitsverzehrs der Zug-/Stoßeinrichtung anspricht und die durch den Kraftfluss über das Energieverzehrelement übertragene Energie zumindest teilweise absorbiert und somit abbaut. Als Energieverzehrelemente kommen beispielsweise Verformungskörper in Frage, bei denen durch eine definierte Verformung eines Elements in destruktiver Weise die Stoßenergie in Verformungsarbeit und Wärme umgewandelt wird.

Ein Energieverzehrelement, in welchem ein Verformungsrohr zur Umwandlung der Stoßenergie verwendet wird, weist eine im wesentlichen rechteckig verlaufende Kennlinie auf, wodurch nach dem Ansprechen des Energieverzehrelements eine maximale Energieaufnahme sichergestellt ist. Allerdings ist es derzeit nicht möglich, eine Energieverzehrvorrichtung, in welcher ein destruktiv ausgebildetes Energieverzehrelement (beispielsweise in Gestalt eines Verformungskörpers) zum Einsatz kommt, und welche somit eine durch das Energieverzehrelement vorgegebene, in der Regel rechteckige Kennlinie aufweist, an bestimmte Anwendungen, insbesondere im Hinblick auf das Ansprechverhalten der Energieverzehrvorrichtung sehr genau anzupassen. Hierzu ist es erforderlich, die Kraft-Weg-Kennlinie der Energieverzehrvorrichtung entsprechend auszulegen, um einen vorhersehbaren, definierten Energieverzehr zu ermöglichen.

Aus der Druckschrift WO 00/05119 A1 ist eine Energieverzehrvorrichtung der eingangs genannten Art bekannt, bei welcher zwischen einem ersten und einem zweiten Flansch (Kraftübertragungselemente) ein Verbindungskörper in Gestalt eines sich in Längsrichtung der Energieverzehrvorrichtung erstreckenden kastenartigen Körpers angeordnet ist. Dieser kastenartige Körper übernimmt bei der bekannten Energieverzehrvorrichtung die Funktion eines Deformationskörpers, der bei Überschreiten einer charakteristischen Auslösekraft seine Kraftübertragungsfunktion durch axialen Faltenkollaps verliert. Hierbei kollabiert der kastenartige Verbindungskörper mit regelmäßigen Faltungen, wobei benachbarte Seiten des kastenartigen Verbindungskörpers grundsätzlich abwechselnd nach innen oder außen aus- bzw. eingestülpt werden.

Des Weiteren ist bei der bekannten Energieverzehrvorrichtung eine Triggerung zur Vorgabe der Faltenbildung des kastenartigen Verbindungskörpers beim Ansprechen des Energieverzehrelements vorgesehen, wobei an denjenigen Stellen, an welchen beim Ansprechen der Energieverzehrvorrichtung die ersten Falten entstehen sollen, geometrische Imperfektionen in Gestalt von konstruktionsbedingten Abkantung vorgesehen sind.

Die vorstehend beschriebene, aus der Druckschrift WO 00/05119 A1 bekannte Energieverzehrvorrichtung allerdings weist den Nachteil auf, dass zur Herstellung des kastenartigen Verbindungskörpers die einzelnen, die Wandung des fertigen Verbindungskörpers bildenden Bleche vorab, d.h. vor dem Verschweißen der Einzelbleche zum Herstellen des kastenartigen Verbindungskörpers, relativ aufwendig bearbeitet werden müssen. Insbesondere müssen an jedem Einzelblech zuvor festgelegte Endstücke über eine genaue Biegelinie um einen bestimmten Winkel abgekantet werden, damit beim fertigen Verbindungskörper die Abkantung tatsächlich als vorab einstellbare Triggerung zur Vorgabe der Faltungsbildung des Verbindungskörpers beim Ansprechen des Energieverzehrelements dienen kann. Insbesondere ist bei der aus dem Stand der Technik bekannten Lösung nicht auszuschließen, dass sich gegebenenfalls bei der Fertigung des kastenartigen Verbindungskörpers auftretenden Ungenauigkeiten, beispielsweise im Hinblick auf die Biegelinie, über welche die Endstücke abzukanten sind, oder aber auch im Hinblick auf den Winkel, um welchen die Endstücke abgekantet werden müssen, negativ auf das Ansprechverhalten des fertig gestellten kastenförmigen Energieverzehrelements auswirken können.

Ein weiteres Beispiel einer derartigen Energieverzehrvorrichtung ist aus der Druckschrift DE 10 2004 045737 A1 bekannt.

Demnach liegt der vorliegenden Erfindung die Aufgabe zugrunde, eine Energieverzehrvorrichtung mit einem destruktiv arbeitenden Energieverzehrelement anzugeben, wobei die Ansprechkraft zum Auslösen des Energieverzehrs und der Ereignisablauf beim Energieverzehr vorab genau einstellbar sind, und wobei das Energieverzehrelement einen besonders einfach herzustellenden und kostengünstigen Aufbau aufweist.

Diese Aufgabe wird erfindungsgemäß mit einer Energieverzehrvorrichtung gemäß dem Anspruch 1 gelöst.

Die erfindungsgemäße Lösung weist eine Reihe wesentlicher Vorteile auf, was nachfolgend beschrieben wird: so ist durch das Vorsehen der Ansprechsicherung für das Energieverzehrelement grundsätzlich sichergestellt, dass die Triggerung zur Vorgabe der Faltenbildung des Verbindungskörpers beim Ansprechen des Energieverzehrelements erst nach Fertigstellung des den Verbindungskörper aufweisenden Energieverzehrelements bzw. nach Fertigstellung (und ggf. sogar nach dem Einbau) der Energieverzehrvorrichtung aktiviert wird. Aus fertigungstechnischer Sicht ist dies vorteilhaft, da die Ausgangsformgebung des Verbindungskörpers (Deformationskörper) trotz des Vorsehens einer Triggerung zur Vorgabe der Faltenbildung des Verbindungskörpers beim Ansprechen des Energieverzehrelements unverändert bleibt. Somit ist es nicht erforderlich, den Prozessablauf bei der Herstellung des Verbindungskörpers umzustellen, da es nicht notwendig ist, vor dem Zusammenbau des Verbindungskörpers jeweils an den einzelnen die Wandung des fertigen Verbindungskörpers ausbildenden Blechen geometrische Imperfektionen (Abkantungen) vorzusehen.

Vielmehr ist erfindungsgemäß die Ansprechsicherung vorgesehen, welche nach Auslösung dieser in der Wandung des Verbindungskörpers zumindest eine erste Faltung ausbildet, welche als Triggerung zur Vorgabe der Faltenbildung des Verbindungskörpers beim Ansprechen des Energieverzehrelements dient. Demnach wäre es auch denkbar, eine Energieverzehrvorrichtung der eingangs genannten Art nachzurüsten, und zwar indem nach Fertigstellung des Energieverzehrelements die Ansprechsicherung nachträglich derart eingebaut wird, dass diese mit dem Energieverzehrelement entsprechend zusammenwirkt. Nach Auslösen dieser nachträglich in der Energieverzehrvorrichtung eingebauten Ansprechsicherung bildet sich die zumindest eine sich in Umlaufrichtung zumindest teilweise um den Umfang des Verbindungskörpers erstreckende erste Falte, die als Triggerung zur Vorgabe der Faltenbildung des Verbindungskörpers beim Ansprechen des Energieverzehrelements dient.

Andererseits ist die erfindungsgemäße Lösung auch für Fälle geeignet, bei denen eine Triggerung zur Vorgabe der Faltenbildung des Verbindungskörpers beim Ansprechen des Energieverzehrelements absichtlich nicht gewünscht ist. Dann nämlich kann die erfindungsgemäße Energieverzehrvorrichtung nach wie vor verwendet werden, wobei allerdings die Ansprechsicherung zum Ausbilden der zumindest einen sich in Umlaufrichtung zumindest teilweise um den Umfang des Verbindungskörpers erstreckenden ersten Faltung absichtlich nicht ausgelöst wird.

Grundsätzlich kann der erfindungsgemäßen Energieverzehrvorrichtung, bei welcher durch Auslösung der Ansprechsicherung eine als Triggerung zur Vorgabe der Faltenbildung des Verbindungskörpers dienende erste Faltung gebildet wird, der Ereignisablauf beim Energieverzehr, d.h. nach Ansprechen des Energieverzehrelements, vorab genau eingestellt werden. Indem nämlich in der Wandung des Verbindungskörpers durch Auslösung der Ansprechsicherung eine geometrische Imperfektion in Gestalt einer ersten Faltung eingebracht wird, kann erreicht werden, dass die Position, Ausrichtung sowie die Bildung der ersten Falten bei dem während des Energieverzehrs stattfindenden axialen Faltenkollaps wesentlich weniger stark von Materialunregelmäßigkeiten im Verbindungskörper abhängen, als dies der Fall wäre, wenn die Energieverzehrvorrichtung keine derartige Triggerung aufweist.

Vorteilhafte Weiterbildungen der erfindungsgemäßen Energieverzehrvorrichtung sind in den Unteransprüchen angegeben.

So ist hinsichtlich der Ansprechsicherung in besonders vorteilhafter Weise vorgesehen, dass diese derart ausgelegt ist, dass die Amplitude der sich nach Auslösung der Ansprechsicherung bildenden zumindest einen ersten Faltung, und somit die Ansprechkraft für das Energieverzehrelement einstellbar sind. Die mit dieser Weiterbildung erzielbaren Vorteile liegen auf der Hand. Demnach wird eine Lösung angegeben, die sich dadurch auszeichnet, dass auch nach Fertigstellung des Energieverzehrelements bzw. des Verbindungskörpers, und sogar nach Fertigstellung der gesamten Energieverzehrvorrichtung die Tiefe der durch das Auslösen der Ansprechsicherung gebildeten ersten Falte in Abhängigkeit von der für das Energieverzehrelement vorgesehenen Ansprechkraft eingestellt werden kann. Dabei wird die Kenntnis ausgenutzt, dass die Ansprechkraft für das Energieverzehrelement, d.h. jene Druckkraft, bei welcher der Verbindungskörper des Energieverzehrelements durch axialen Faltenkollaps seine Kraftübertragungsfunktion verliert und zumindest einen Teil der über die Energieverzehrvorrichtung übertragenen Energie in plastische Verformungsarbeit umwandelt und somit vernichtet, von der Amplitude der ersten Falte abhängt.

Erfindungsgemäß weist die Ansprechsichereung zumindest ein im Inneren des Verbindungskörpers vorgesehenes Zugelement, insbesondere in Gestalt eines Zugbandes oder dergleichen, auf, wobei dieses zumindest eine Zugelement an zumindest zwei gegenüberliegenden Befestigungsstellen mit dem Verbindungskörper verbunden und ausgelegt ist, die zumindest eine sich in Umfangsrichtung des Verbindungskörpers erstreckende erste Faltung auszubilden, wenn ein zwischen den gegenüberliegenden Befestigungsstellen liegender Bereich des Zugelements mit Hilfe eines in das Innere des Verbindungskörpers vorschiebbaren Manipulators vorzugsweise mittig eingedrückt wird. Hierbei handelt es sich um eine besonders leicht zu realisierende aber dennoch effektive Lösung zur Ausbildung einer Ansprechsicherung. Durch das Vorschieben des Manipulators in das Innere des Verbindungskörpers derart, dass vorzugsweise der mittige Bereich des Zugelements eingedrückt und somit die zwei gegenüberliegenden Befestigungsstellen relativ aufeinander zubewegt werden, bildet sich bei den jeweiligen Befestigungsstellen eine sich in Umlaufrichtung zumindest teilweise um den Umfang des Verbindungskörpers erstreckende erste Faltung mit einer zur Mitte des Verbindungskörpers zeigenden Faltrichtung. Es ist ersichtlich, dass bei dieser Ausführungsform die Amplitude der zumindest einen ersten Faltung und somit die Ansprechkraft für das Energieverzehrelement eingestellt werden können, indem das Ausmaß des mit dem Manipulator bewirkten Eindrückens des zwischen den gegenüberliegenden Befestigungsstellen liegenden Bereiches des Zugelements eingestellt wird.

Hinsichtlich der Befestigung des zumindest einen Zugelements am Verbindungskörper der Energieverzehrvorrichtung ist vorgesehen, dass das zumindest eine im Inneren des Verbindungskörpers vorgesehene Zugelement an zwei gegenüberliegenden Befestigungsstellen mit der Innenwandung des Verbindungskörpers kraftschlüssig verbunden ist. Andererseits ist es aber auch denkbar, dass das zumindest eine im Inneren des Verbindungskörpers vorgesehene Zugelement an zwei gegenüberliegenden Befestigungsstellen mit der Außenwandung des Verbindungskörpers kraftschlüssig verbunden ist und von den jeweiligen Befestigungsstellen durch entsprechende in der Wandung des Verbindungskörpers vorgesehene Öffnungen läuft. Bei dieser Art der Befestigung handelt es sich um eine besonders leicht zu realisierende Lösung. Selbstverständlich kommen aber auch andere Lösungen in Frage.

Im Hinblick auf den vorschiebbaren Manipulator, der zum Eindrücken des zumindest einen im Inneren des Verbindungskörpers vorgesehenen Zugelements dient, ist es bevorzugt, dass dieser an seinem Kopfbereich einen Dorn aufweist, wobei dieser Dorn zusammen mit dem Kopfbereich durch eine entsprechende Öffnung an der jeweiligen Stirnseite des ersten und/oder zweiten Kraftübertragungselements relativ zu der Energieverzehrvorrichtung in Längsrichtung dieser verschiebbar und mit dem zwischen den gegenüberliegenden Befestigungsstellen liegenden Bereich kraftschlüssig verbindbar ist. Dies ermöglicht das Auslösen der Ansprechsicherung bei einer fertiggestellten Energieverzehrvorrichtung. Demnach können auch in einem bereits in einer Energieverzehrvorrichtung eingebauten Verbindungskörper nachträglich geometrische Imperfektionen (Faltungen) eingebracht werden, ohne dass der Verbindungskörper wieder aus der Energieverzehrvorrichtung ausgebaut werden muss.

Im Hinblick auf das Ansprechverhalten des Energieverzehrelements sowie im Hinblick auf den Ereignisablauf beim Energieverzehr ist besonders bevorzugt vorgesehen, dass der Verbindungskörper eine sich verjüngende Formgebung, vorzugsweise eine sich vom ersten Kraftübertragungselement in Richtung des zweiten Kraftübertragungselements verjüngende Formgebung aufweist. Diese konische Ausgestaltung hat den Vorteil einer erhöhten Stabilität des Verbindungskörpers gegenüber seitlichen Kräften und Momenten sowie gegenüber exzentrischen Längskräften. In diesem Zusammenhang wäre es denkbar, dass der Verbindungskörper eine gekantete, insbesondere pyramidenstumpfartige Formgebung aufweist, wobei an zumindest einer, und vorzugsweise an jeder Kante des Verbindungskörpers eine Aussparung vorgesehen ist, welche im Bereich der nach Auslösen der Ansprechsicherung bewirkten ersten Faltenbildung liegt. Diese Aussparungen bzw. Blechausschnitte an den Kanten des Pyramidenstumpfes dienen dazu, dass die Kante kein natürliches Aussteifen des Pyramidenstumpfes in Höhe der ersten Falte bildet, so dass sich diese durch Auslösen der Ansprechsicherung definiert ausprägen kann. Weiterhin kann durch das Vorsehen der Aussparungen erreicht werden, dass die Spannungsspitzen der zum Ansprechen des Energieverzehrelements notwendigen Auslösekraft verringert werden.

Vorzugsweise ist bei einer Energieverzehrvorrichtung, die einen Verbindungskörper mit einer sich verjüngenden Formgebung aufweist, vorgesehen, dass die Ansprechsicherung an der verjüngten Seite des Verbindungskörpers angeordnet ist, um somit die Ansprechkraft für das Auslösen des Energieverzehrelements noch besser einstellen zu können. Die verjüngende Formgebung des Verbindungskörpers übernimmt dabei eine "Fokussierfunktion", da die bei der Übertragung von Kräften über die Energieverzehrvorrichtung auftretende mechanische Druckspannung am verjüngten Ende am stärksten ist. Selbstverständlich sind aber auch andere Anordnungen der Ansprechsicherung im Hinblick auf den Verbindungskörper denkbar. Insbesondere kann auch an beiden Enden des Verbindungskörpers oder aber auch in der Mitte des Verbindungskörpers eine Ansprechsicherung vorgesehen sein.

Schließlich ist im Hinblick auf eine besonders bevorzugte Verwendung der erfindungsgemäßen Energieverzehrvorrichtung vorgesehen, dass das erste Kraftübertragungselement einen ersten Flansch aufweist, der ausgelegt ist, die Energieverzehrvorrichtung am Hauptrahmen eines Wagenkastens eines mehrgliedrigen Fahrzeuges, insbesondere eines Schienenfahrzeuges, zu befestigen, und dass das zweite Kraftübertragungselement einen zweiten Flansch aufweist und dahingehend ausgelegt ist, um mit Hilfe des zweiten Flanschs an der Energieverzehrvorrichtung zumindest ein vorgeschaltetes Element, wie beispielsweise ein Pufferelement oder ein destruktiv oder regenerativ ausgebildetes Energieverzehrelement, zu befestigen.

In vorteilhafter Weise wird dabei die Energieverzehrvorrichtung an dem Hauptrahmen des Wagenkastens befestigt, nachdem die Ansprechsicherung ausgelöst wurde, d.h. sich die zumindest eine in Umlaufrichtung zumindest teilweise um den Umfang des Verbindungskörpers erstreckende erste Faltung ausgebildet hat. Grundsätzlich ist es aber auch denkbar, dass erst nach dem Befestigen der Energieverzehrvorrichtung am Hauptrahmen des Wagenkastens die Ansprechsicherung ausgelöst wird.

Im Folgenden wird eine bevorzugte Ausführungsform der erfindungsgemäßen Energieverzehrvorrichtung anhand der beigefügten Zeichnungen beschrieben.

Es zeigen:
- Fig. 1:: eine halbtransparente, perspektivische Ansicht einer ersten bevorzugten Ausführungsform der erfindungsgemäßen Energieverzehrvorrichtung vor dem Auslösen der Ansprechsicherung;
- Fig. 2:: eine perspektivische Ansicht einer zweiten bevorzugten Ausführungsform der erfindungsgemäßen Energieverzehrvorrichtung vor dem Auslösen der Ansprechsicherung;
- Fig. 3:: eine längsgeschnittene Darstellung der in Fig. 1 gezeigten Energieverzehrvorrichtung;
- Fig. 4:: eine längsgeschnittene Darstellung der in Fig. 1 gezeigten Energieverzehrvorrichtung mit einem vorgeschobenen Manipulator zum Auslösen der Ansprechsicherung;
- Fig. 5:: eine längsgeschnittene Darstellung der in Fig. 1 gezeigten Energieverzehrvorrichtung nach Auslösung der Ansprechsicherung; und
- Fig. 6:: eine perspektivische Ansicht der in Fig. 5 gezeigten Energieverzehrvorrichtung.

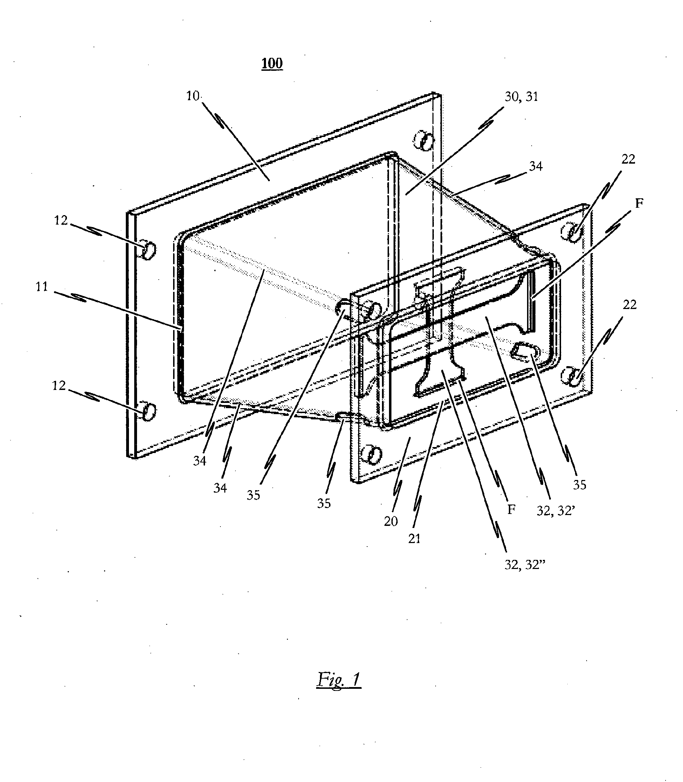

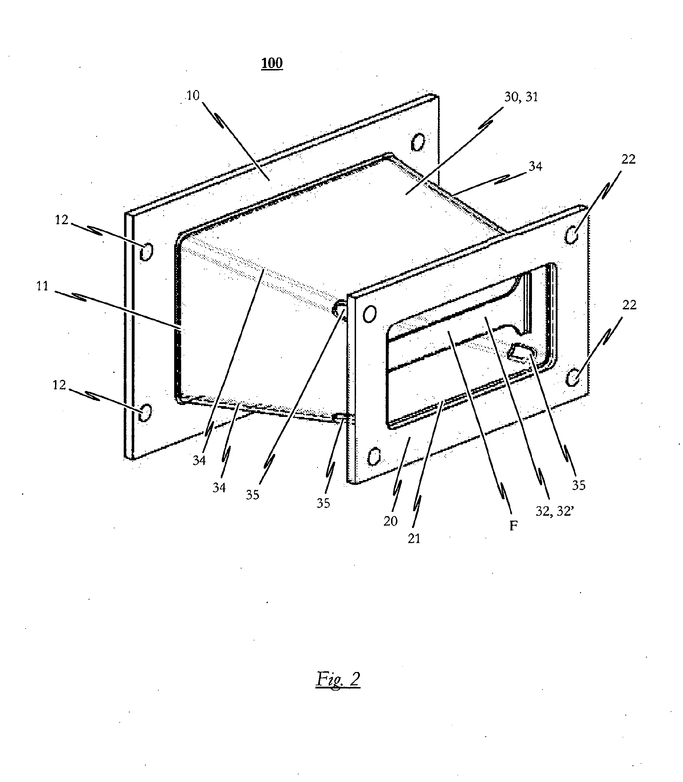

In Fig. 1 und Fig. 2 sind jeweils eine bevorzugte Ausführungsform der erfindungsgemäßen Energieverzehrvorrichtung 100 dargestellt, welche sich insbesondere für mehrgliedrige Fahrzeuge, wie Schienenfahrzeuge etc., als Stoßsicherung, vorzugsweise in Kombination mit einer (nicht explizit dargestellten) Zug-/Stoßeinrichtung zum Schutz des zugehörigen Fahrzeuguntergestells eignet.

Wie dargestellt, weist die Energieverzehrvorrichtung 100 ein erstes Kraftübertragungselement 10 sowie ein zweites Kraftübertragungselement 20 auf, wobei die beiden Kraftübertragungselemente bei diesen Ausführungsformen jeweils als rechteckige Flansche ausgebildet sind. Selbstverständlich ist aber die Erfindung nicht auf eine derartige Formgebung der Flansche beschränkt.

Das erste Kraftübertragungselement 10 ist ausgelegt, die Energieverzehrvorrichtung 100 am (nicht gezeigten) Hauptrahmen eines Wagenkastens zu befestigen; hierzu sind am ersten Kraftübertragungselement 10 entsprechende Befestigungsmittel 12 vorgesehen.

Andererseits ist das zweite Kraftübertragungselement 20 der in Fig. 1 und Fig. 2 gezeigten Ausführungsformen dahingehend ausgelegt, dass über den zweiten Flansch 20 an der Energieverzehrvorrichtung 100 zumindest ein (nicht gezeigtes) vorgeschaltetes Element, wie etwa ein weiteres Energieverzehrelement, befestigt werden kann. Hierfür sind wiederum am zweiten Kraftübertragungselement 20 geeignete Befestigungsmittel 22 vorgesehen.

Wie dargestellt, kommen als Befestigungsmittel 12, 22 insbesondere Durchgangsbohrungen in Frage, welche sich jeweils durch den ersten bzw. zweiten Flansch 10, 20 erstrecken, und welche ausgelegt sind, eine Schraube, einen Stift oder dergleichen aufzunehmen, der letztendlich zum Befestigung der Energieverzehrvorrichtung 100 am Hauptrahmen des Wagenkastens bzw. zum Befestigen eines vorgeschalteten Elements an der Energieverzehrvorrichtung 100 dient.

Anstelle der Durchgangsbohrungen kommen als Befestigungsmittel 12, 22 aber auch andere Lösungen in Frage. Wenn beispielsweise konstruktionsbedingt zumindest einer der Flansche 10, 20 nur mit einem relativ kleinen Randbereich versehen werden kann, in welchem kein hinreichender Platz für geeignete Durchgangsbohrungen gegeben ist, bzw. wenn kein hinreichender Raum für Schrauben etc. vorliegt, die in den Durchgangsbohrungen aufzunehmen sind, bietet es sich an, an der Rückseite des betreffenden Flansches 10, 20, also an der Seite des Flansches 10, 20, die dem Verbindungskörper 31 abgewandt ist, ein Rohrstutzen oder dergleichen anzuschweißen oder andersartig zu befestigen, wobei letztendlich dieser Rohrstutzen zum Befestigung der Energieverzehrvorrichtung 100 am Hauptrahmen des Wagenkastens bzw. zum Befestigen eines vorgeschalteten Elements an der Energieverzehrvorrichtung 100 dient. Denkbar hierbei wäre es beispielsweise, dass im oder am freien Ende des Rohrstutzens ein geeignetes Verbindungselement angeordnet ist, welches zum Ausbilden einer kraft- und formschlüssigen Verbindung mit dem Hauptrahmen des Wagenkastens bzw. mit einem vorgeschalteten Element verwendet wird.

Die Energieverzehrvorrichtung 100 weist neben dem ersten und zweiten Kraftübertragungselement 10, 20 des weiteren ein Energieverzehrelement 30 mit einem Verbindungskörper 31 auf, wobei der Verbindungskörper 31 die Gestalt eines sich in Längsrichtung der Energieverzehrvorrichtung 100 erstreckenden Hohlkörpers hat. Der Verbindungskörper 31 dient bei der dargestellten Energieverzehrvorrichtung 100 als Verformungskörper, der nach Ansprechen des Energieverzehrelements 30 durch plastische Verformung zumindest einen Teil der über die Energieverzehrvorrichtung 100 übertragenen Energie umwandelt und somit absorbiert.

Die Kraftübertragungselemente 10, 20 und das Energieverzehrelement 30 sind spielfrei miteinander derart verbunden, dass Zug- und Stoßkräfte in Längsrichtung der Energieverzehrvorrichtung 100 übertragbar sind, wobei der bei der Übertragung der Kräfte stattfindende Kraftfluss vollständig über die Wandung des Verbindungskörpers 31 läuft.

Durch eine geeignete Wahl der Wandstärke des als Hohlkörper ausgebildeten Verbindungskörpers 31 sowie durch eine geeignete Wahl des für den Verbindungskörper gewählten Materials kann sichergestellt werden, dass dem Energieverzehrelement 30 bis zu einem durch den Kraftfluss über den Verbindungskörper 31 übertragenen festlegbaren Energiebetrag eine Kraftübertragungsfunktion zukommt, so dass die Kraftübertragungselemente 10, 20 im wesentlichen starr zueinander sind.

Andererseits verliert der Verbindungskörper 31 bei Überschreiten des durch den Kraftfluss über die Wandung des Verbindungskörpers 31 übertragenen, festlegbaren Energiebetrags seine Kraftübertragungsfunktion, so dass die Kraftübertragungselemente 10, 20 relativ zueinander in Längsrichtung der Energieverzehrvorrichtung 100 verschoben werden. In diesem Fall wird zumindest ein Teil des übertragenen Energiebetrages von dem Energieverzehrelement 30 durch die plastische Deformation des Verbindungskörpers 31 in Umformungsarbeit umgebaut und somit absorbiert.

Die nach dem Ansprechen des Energieverzehrelements 30 bewirkte plastische Verformung des Verbindungskörpers 31 findet in Gestalt eines axial verlaufenden Faltenkollapses statt, wobei sich in Längsrichtung der Energieverzehrvorrichtung 100 progressiv fortschreitende parallele Faltungen ergeben.

Um zu erreichen, dass sich nach Ansprechen des Energieverzehrelements 30 die Falten in einer definierten, vorhersagbaren Weise bilden, und um somit im Hinblick auf den bewirkten Energieverzehr einen vorab festlegbaren Ereignisablauf zu ermöglichen, ist erfindungsgemäß vorgesehen, dass die Energieverzehrvorrichtung 100 für das Energieverzehrelement 30 ferner eine Ansprechsicherung 32 aufweist, welche derart mit dem Energieverzehrelement 30 zusammenwirkt, dass nach Auslösung der Ansprechsicherung 32 zumindest eine sich in Umlaufrichtung zumindest teilweise um den Umfang des Verbindungskörpers 31 erstreckende erste Faltung bildet, wobei diese erste Faltung als Triggerung zur Vorgabe der Faltenbildung des Verbindungskörpers 31 beim Ansprechen des Energieverzehrelements 30 dient.

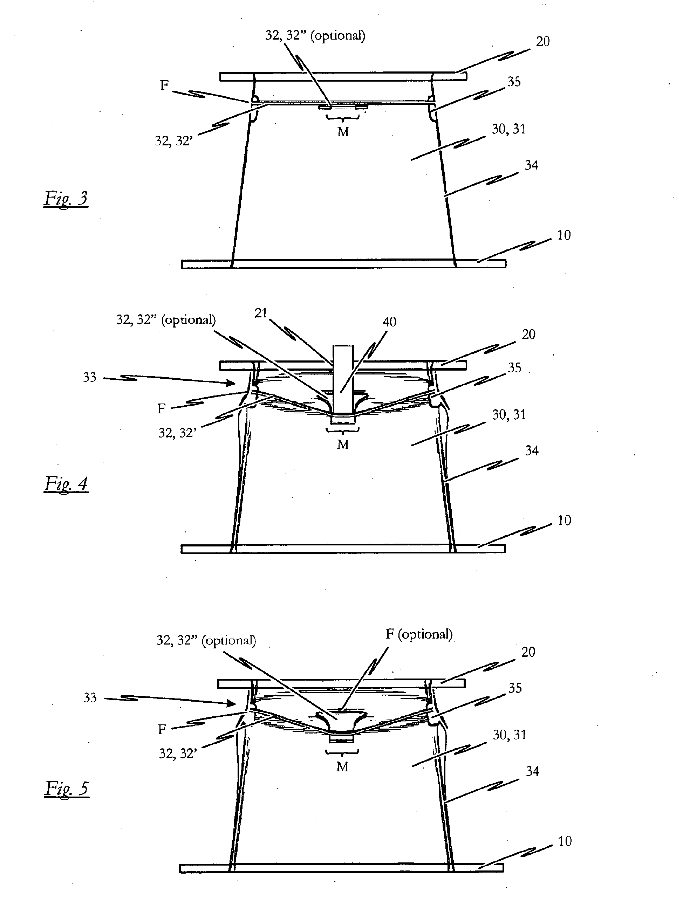

In den Figuren 1 und 2 ist jeweils ein Zustand der Energieverzehrvorrichtung 100 gezeigt, in welchem die Ansprechsicherung 32 noch nicht ausgelöst und somit auch noch keine sich in Umlaufrichtung zumindest teilweise um den Umfang des Verbindungskörpers 31 erstreckende erste Faltung ausgebildet wurde. Der Vorgang des Auslösens der Ansprechsicherung 32 wird nachstehend unter Bezugnahme auf die Figuren 3 bis 5 beschrieben.

Bei der in Fig. 1 dargestellten Ausführungsform der erfindungsgemäßen Energieverzehrvorrichtung 100 ist als bevorzugte Realisierung für die Ansprechsicherung 32 vorgesehen, dass diese zwei in etwa orthogonal zueinander ausgerichtete Zugelemente 32', 32" aufweist, wobei jedes der beiden Zugelemente 32', 32" an zwei gegenüberliegenden Befestigungsstellen F mit dem Verbindungskörper 31 verbunden ist.

Andererseits zeigt Fig. 2 eine Ausführungsform der erfindungsgemäßen Energieverzehrvorrichtung 100, bei welcher die Ansprechsicherung 32 lediglich ein Zugelement 32' aufweist. Dieses Zugelement 32' liegt bei Fig. 2 in einer im wesentlichen horizontal verlaufenden Ebene, obwohl für das Zugelement 32' selbstverständlich auch andere Ausrichtungen in Frage kommen.

Die Funktionsweise der Zugelemente 32', 32" im Hinblick auf das Auslösen der Ansprechsicherung 32 wird nachfolgend unter Bezugnahme auf Fig. 4 beschrieben.

Der Verbindungskörper 31 weist, wie es in den Figuren gezeigt ist, eine sich vom ersten Kraftübertragungselement 10 in Richtung des zweiten Kraftübertragungselements 20 verjüngende Formgebung in Gestalt eines gekanteten pyramidenstumpfartigen Körpers auf. Dabei sind in dem Pyramidenstumpf am querschnittskleineren Ende des Verbindungskörpers 31 die entsprechenden Zugelemente 32', 32" der Ansprechsicherung 32 angebracht. Ferner befinden sich in Höhe der Zugelemente 32', 32" Blechausschnitte bzw. Aussparungen 35 an den Kanten 34 des Verbindungskörpers 31.

In Fig. 3 ist eine längsgeschnittene Darstellung der in Fig. 1 gezeigten Energieverzehrvorrichtung 100 gemäß der ersten Ausführungsform dargestellt. In Fig. 3 ist insbesondere die Lage der Zugelemente 32', 32" an dem verjüngten Ende des konisch zulaufenden Verbindungskörpers 31 gezeigt. Demnach befinden sich die jeweiligen Befestigungsstellen F zum Befestigen der Zugelemente 32', 32" jeweils an Positionen auf der Innenwandung des Verbindungskörpers 31, die sich in etwa in Höhe der Blechausschnitte 35 an den Kanten 34 des pyramidenstumpfartigen Verbindungskörpers 31 befinden. Alternativ hierzu wäre es aber auch denkbar, dass die im Inneren des Verbindungskörpers 31 vorgesehenen Zugelemente 32', 32" an zwei gegenüberliegenden Befestigungsstellen mit der Außenwandung des Verbindungskörpers 31 kraftschlüssig verbunden sind, wobei dann die jeweiligen Zugelemente 32', 32" von den entsprechenden Befestigungsstellen durch geeignete in der Wandung des Verbindungskörpers vorgesehene Öffnungen laufen.

An dieser Stelle sei darauf hingewiesen, dass die im Zusammenhang mit den Figuren 3 bis 6 dargelegten Ausführungen selbstverständlich auch für die in Fig. 2 gezeigte Ausführungsform gelten, bei welcher die Ansprechsicherung 32 lediglich ein Zugelement 32' aufweist. Von daher wurde in den Figuren 3 bis 5 bei den entsprechenden Komponenten, die bei der in Fig. 1 gezeigten Ausführungsform vorgesehen und bei der in Fig. 2 gezeigten Ausführungsform nicht vorgesehen sind, der entsprechende Zusatz "optional" verwendet.

In Fig. 4 ist die in Fig. 3 gezeigte Energieverzehrvorrichtung 100 in einem Zustand gezeigt, in welchem durch Vorschieben eines Manipulators 40 die Ansprechsicherung 32 ausgelöst wird. Im Einzelnen ist dargestellt, dass der in das Innere des Verbindungskörpers 31 vorschiebbare Manipulator 40 einen Dorn aufweist, welcher durch eine entsprechende Öffnung 21 an der Stirnseite des zweiten Kraftübertragungselements 20 relativ zu der Energieverzehrvorrichtung 100 in Längsrichtung dieser verschiebbar und mit dem zwischen den gegenüberliegenden Befestigungsstellen F liegenden Bereich M kraftschlüssig verbindbar ist. Dabei wird der zwischen den gegenüberliegenden Befestigungsstellen F liegende Bereich M der jeweiligen Zugelemente 32', 32" mit Hilfe des Manipulators 40 eingedrückt, infolgedessen die Zugelemente 32', 32" die Seitenwände des Verbindungskörpers 31 an den jeweiligen Befestigungsstellen F nach Innen ziehen. Dadurch entsteht an jeder Seite des Verbindungskörpers 31, an welcher sich eine Befestigungsstelle F für das Zugelement 32', 32" befindet, eine Einbeulung 33. Durch diese plastische Verformung ist die erste Falte 33 an jeder Seite in ihrer Position im pyramidenstumpfartigen Verbindungskörper 31 und in ihrer Faltrichtung vorgegeben.

Indem das durch das Vordrücken des Manipulators 40 bewirkte Eindrücken der jeweiligen Zugelemente 32', 32" bzw. des Zugelements 32' entsprechend geregelt wird, kann die Amplitude der sich nach Auslösung der Ansprechsicherung 32 bildenden zumindest einen ersten Faltung 33 und somit die Ansprechkraft für das Energieverzehrelement 30 eingestellt werden. Es ist ersichtlich, dass die Amplitude der Faltung 33 umso größer und die Ansprechkraft für das Energieverzehrelement 30 umso kleiner ist, je stärker die jeweiligen Zugelemente 32', 32" bzw. das Zugelement 32' mit dem Manipulator 40 eingedrückt werden.

Die sich nach Auslösung der Ansprechsicherung 32 ausbildenden ersten Faltungen 33 erstrecken sich in Umlaufrichtung zumindest teilweise um den Umfang des Verbindungskörpers 31 und weisen eine zur Mitte des Verbindungskörpers 31 hin zeigende Faltrichtung auf, wodurch eine Triggerung zur Vorgabe der Faltenbildung des Verbindungskörpers 31 beim Ansprechen des Energieverzehrelements 30 bereitgestellt wird.

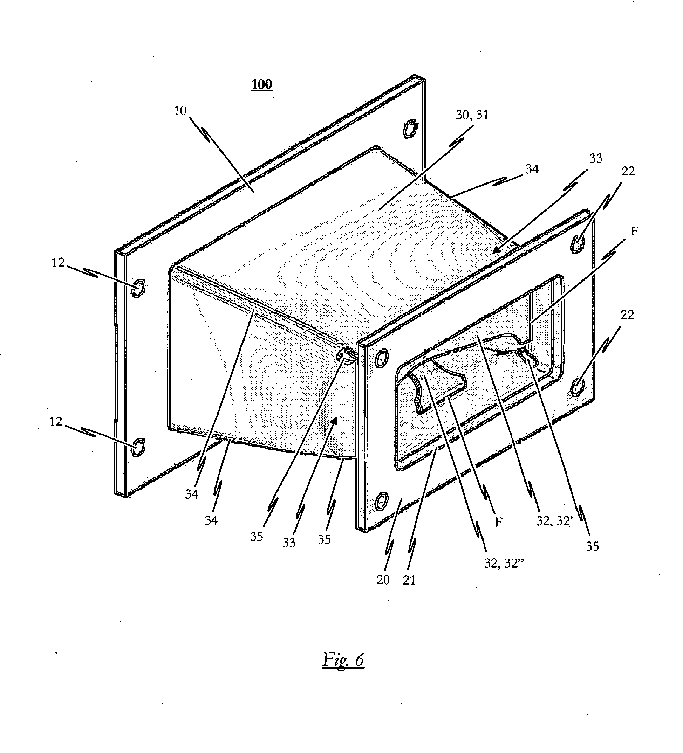

In den Figuren 5 und 6 ist die Energieverzehrvorrichtung 100 gemäß der in Fig. 1 gezeigten Ausführungsform in einer längsgeschnittenen Darstellung bzw. in einer perspektivischen Darstellung jeweils für einen Fall gezeigt, nachdem die Ansprechsicherung ausgelöst wurde (vgl. Fig. 4), und nachdem sich somit die Triggerung zur Vorgabe der Faltenbildung des Verbindungskörpers 31 beim Ansprechen des Energieverzehrelements 30 in Gestalt der zumindest einen sich in Umlaufrichtung zumindest teilweise um den Umfang des Verbindungskörpers 31 erstreckenden ersten Faltung 33 ausgebildet hat. Dabei ist zu erkennen, dass die bei der bevorzugten Ausführungsform an jeder Kante 34 des Verbindungskörpers 31 vorgesehene Aussparung 35 im Bereich der nach Auslösen der Ansprechsicherung 32 bewirkten Faltenbildung liegt. Diese Blechausschnitte 35 an den Kanten 34 des pyramidenartigen Verbindungskörpers 31 dienen dazu, dass die jeweilige Kante 34 kein natürliches Aussteifen des Verbindungskörpers 31 in Höhe der ersten Falte 33 bildet, und dass sich diese erste Falte 33 durch das Vordrücken des Manipulators 40 definiert ausprägen lässt. Insbesondere kann damit erreicht werden, dass die Spannungsspitzen der zum Auslösen des in der Energieverzehrvorrichtung 100 vorgesehenen Energieverzehrelements 30 reduziert werden können.

Es sei darauf hingewiesen, dass die Ausführung der Erfindung nicht auf die in den Figuren 1 bis 6 beschriebenen Ausführungsbeispiele beschränkt ist, sondern auch in einer Vielzahl von Varianten möglich ist. Insbesondere gelten die im Zusammenhang mit der in Fig. 1 dargestellten Ausführungsform in analoger Weise für die in Fig. 2 gezeigten bevorzugten Realisierung, bei welcher die Ansprechsicherung 32 lediglich ein Zugelement 32', aufweist. Auch kommt für die Formgebung des Verbindungskörpers 31 eine andere Form als die dargestellte pyramidenstumpfartige Formgebung in Frage. Des Weiteren ist die Lage der Ansprechsicherung 32 an dem verjüngten Ende des konisch ausgebildeten Verbindungskörpers 31 nicht auf das in den Figuren gezeigte Ausführungsbeispiel beschränkt.

Sämtlichen Ausführungsformen der Erfindung ist insbesondere gemeinsam, dass mit Hilfe der Ansprechsicherung 32 nach Auslösung dieser zumindest eine sich in Umlaufrichtung zumindest teilweise um den Umfang des Verbindungskörpers 31 erstreckende erste Falte 33 bildet, wobei diese zumindest eine erste Falte 33 beim Ansprechen des Energieverzehrelements 30 als Triggerung zur Vorgabe der Faltenbildung des Verbindungskörpers 31 dient. Für den Fall, dass als Ansprechsicherung 32 ein Zugelement 32' (vgl. Fig. 2) oder mehrere Zugelemente 32', 32" (vg. Fig. 1) zum Einsatz kommt, ist es ersichtlich, dass nach Auslösung der Ansprechsicherung 32 die sich in Umlaufrichtung zumindest teilweise um den Umfang des Verbindungskörpers 31 erstreckenden erste Falten 33 eine zur Mitte des Verbindungskörpers 31 zeigenden Faltrichtung aufweisen. Ferner ist ersichtlich, dass diese erste Falten 33 jeweils in einem Bereich an bzw. in der Nähe der gegenüberliegenden Befestigungsstellen F liegen, an denen das im Inneren des Verbindungskörpers 31 vorgesehene Zugelement 32' bzw. die im Inneren des Verbindungskörpers 31 vorgesehenen Zugelemente 32', 32" der Ansprechsicherung 32 mit dem Verbindungskörper 31 ist bzw. sind. Bei einem im Querschnitt winkelig ausgebildeten Verbindungskörper 31, d.h. einem Verbindungskörper 31, der mehrere über jeweilige Kanten verbundene Seitenflächen aufweist, beschränkt sich die jeweilige Faltenausbildung dann auf die Seitenfläche, in welcher die Befestigungsstelle F liegt.

### Bezugszeichenliste

- 10: erstes Kraftübertragungselement/erster Flansch
- 11: Öffnung im ersten Kraftübertragungselement/Flansch
- 12: Befestigungsmittel
- 20: zweites Kraftübertragungselement/zweiter Flansch
- 21: Öffnung im zweiten Kraftübertragungselement/Flansch
- 22: Befestigungsmittel
- 30: Energieverzehrelement
- 31: Verbindungskörper
- 32: Ansprechsicherung
- 32', 32": Zugelement
- 33: Ansprechtriggerung/erste Faltung;
- 34: Kante
- 35: Aussparung
- 40: Manipulator
- 100: Energieverzehrvorrichtung

- F: Befestigungsstelle
- M: mittiger Bereich des Zugelements

## Patentansprüche

1. Energieverzehrvorrichtung für mehrgliedrige Fahrzeuge, insbesondere Schienenfahrzeuge, mit einem ersten Kraftübertragungselement (10), einem zweiten Kraftübertragungselement (20) und einem Energieverzehrelement (30), welches einen Verbindungskörpers (31) in Gestalt eines sich in Längsrichtung der Energieverzehrvorrichtung (100) erstreckenden Hohlkörpers aufweist, wobei die Kraftübertragungselemente (10, 20) mit Hilfe des Energieverzehrelements (30) derart kraftschlüssig miteinander verbunden sind, dass Zug- und Stoßkräfte in Längsrichtung der Energieverzehrvorrichtung (100) übertragbar sind, indem der bei der Übertragung der Kräfte stattfindende Kraftfluss vollständig über den Verbindungskörper (31) läuft, wobei das Energieverzehrelement (30) derart ausgelegt ist, dass bis zu einem durch den Kraftfluss über den Verbindungskörper (31) übertragenen festlegbaren Energiebetrag die Kraftübertragungselemente (10, 20) im wesentlichen starr zueinander sind, und dass bei Überschreiten des durch den Kraftfluss über den Verbindungskörper (31) übertragenen festlegbaren Energiebetrags die Kraftübertragungselemente (10, 20) relativ zueinander in Längsrichtung der Energieverzehrvorrichtung (100) verschoben werden, wobei zumindest ein Teil des übertragenen Energiebetrags von dem Energieverzehrelement (30) absorbiert und abgebaut wird, wobei die Energieverzehrvorrichtung (100) ferner eine Ansprechsicherung (32) für das Energieverzehrelement (30) aufweist, welche derart mit dem Energieverzehrelement (30) zusammenwirkt, dass sich nach Auslösung der Ansprechsicherung (32) zumindest eine sich in Umlaufrichtung zumindest teilweise um den Umfang des Verbindungskörpers (31) erstreckende erste Falte (33) bildet, wobei die erste Falte (33) als Triggerung zur Vorgabe der Faltenbildung des Verbindungskörpers (31) beim Ansprechen des Energieverzehrelements (30) dient,
**dadurch gekennzeichnet, dass**
die Ansprechsicherung (32) zumindest ein im Inneren des Verbindungskörpers (31) vorgesehenes Zugelement (32', 32") aufweist, welches an zumindest zwei gegenüberliegenden Befestigungsstellen (F) mit dem Verbindungskörper (31) verbunden und ausgelegt ist, die zumindest eine sich in Umfangsrichtung des Verbindungskörpers (31) erstreckende erste Falte (33) auszubilden, wenn ein zwischen den gegenüberliegenden Befestigungsstellen (32') liegender Bereich (32") des Zugelements (32) mit Hilfe eines in das Innere des Verbindungskörpers (31) vorschiebbaren Manipulators (40) vorzugsweise mittig eingedrückt wird.

2. Energieverzehrvorrichtung nach Anspruch 1, wobei die Ansprechsicherung (32) derart ausgelegt ist, dass die Amplitude der sich nach Auslösung der Ansprechsicherung (32) bildenden zumindest einen ersten Falte (33) und somit die Ansprechkraft für das Energieverzehrelement (30) einstellbar sind.

3. Energieverzehrvorrichtung nach einem der vorhergehenden Ansprüche, wobei das zumindest eine im Inneren des Verbindungskörpers (31) vorgesehene Zugelement (32', 32") an zwei gegenüberliegenden Befestigungsstellen (F) mit der Innenwandung des Verbindungskörpers (31) kraftschlüssig verbunden ist.

4. Energieverzehrvorrichtung nach einem der Ansprüche 1 oder 2, wobei das zumindest eine im Inneren des Verbindungskörpers (31) vorgesehene Zugelement (32', 32") an zwei gegenüberliegenden Befestigungsstellen (F) mit der Außenwandung des Verbindungskörpers (31) kraftschlüssig verbunden ist und von den jeweiligen Befestigungsstellen durch entsprechende in der Wandung des Verbindungskörpers (31) vorgesehene Öffnungen läuft.

5. Energieverzehrvorrichtung nach einem der vorhergehenden Ansprüche, wobei der in das Innere des Verbindungskörpers (31) vorschiebbare Manipulator (40) einen Dorn aufweist, welcher durch eine entsprechende Öffnung (11, 21) an der jeweiligen Stirnseite des ersten und/oder zweiten Kraftübertragungselements (10, 20) relativ zu der Energieverzehrvorrichtung (100) in Längsrichtung dieser verschiebbar und mit dem zwischen den gegenüberliegenden Befestigungsstellen (F) liegenden Bereich (M) kraftschlüssig verbindbar ist.

6. Energieverzehrvorrichtung nach einem der vorhergehenden Ansprüche, wobei der Verbindungskörper (31) eine sich verjüngende Formgebung, vorzugsweise eine sich vom ersten Kraftübertragungselement (10) in Richtung des zweiten Kraftübertragungselements (20) verjüngende Formgebung aufweist.

7. Energieverzehrvorrichtung nach einem der vorhergehenden Ansprüche, insbesondere nach Anspruch 4, wobei der Verbindungskörper (31) eine gekantete, insbesondere pyramidenstumpfartige Formgebung aufweist.

8. Energieverzehrvorrichtung nach Anspruch 7, bei welcher zumindest eine und vorzugsweise jede Kante (34) des Verbindungskörpers (31) eine Aussparung (35) aufweist, welche im Bereich der nach Auslösen der Ansprechsicherung (32) bewirkten Faltenbildung liegt.

9. Energieverzehrvorrichtung nach einem der vorhergehenden Ansprüche, wobei die Ansprechsicherung (32) an der Seite des Energieverzehrelements (30) angeordnet ist, an welcher das erste oder das zweite Kraftübertragungselement (10, 20) befestigt ist.

10. Energieverzehrvorrichtung nach einem der Ansprüche 1 bis 8, wobei jeweils eine Ansprechsicherung (32) an jeder Seite des Energieverzehrelements (30) angeordnet ist.

11. Energieverzehrvorrichtung nach einem der vorhergehenden Ansprüche, wobei das erste Kraftübertragungselement (10) einen ersten Flansch aufweist, der ausgelegt ist, die Energieverzehrvorrichtung (100) am Hauptrahmen eines Wagenkastens eines mehrgliedrigen Fahrzeuges, insbesondere eines Schienenfahrzeuges zu befestigen, und wobei das zweite Kraftübertragungselement (20) einen zweiten Flansch aufweist und ausgelegt ist, um über den zweiten Flansch an der Energieverzehrvorrichtung (100) zumindest ein vorgeschaltetes Element, wie etwa ein Pufferelement oder ein derartiges Energieverzehrelement, zu befestigen.

## Claims

1. An energy dissipation device for multi-member vehicles, rail-mounted vehicles in particular, having a first force-transferring element (10), a second force-transferring element (20) and an energy-dissipating element (30) comprising a connecting body (31) in the form of a hollow body extending in the longitudinal direction of the energy dissipation device (100), wherein the force-transferring elements (10, 20) are non-positively connected to one another via the energy-dissipating element (30) such that tractive and impact forces can be transmitted in the longitudinal direction of the energy dissipation device (100) by the force flow occurring during the transfer of forces running completely through the connecting body (31), wherein the energy-dissipating element (30) is configured such that the force-transferring elements (10, 20) are substantially rigid relative one another up to a definable amount of energy transmitted in the force flow through the connecting body (31) and that upon the definable amount of energy transmitted in the force flow through the connecting body (31) being exceeded, the force-transferring elements (10, 20) are displaced relative one another in the longitudinal direction of the energy dissipation device (100), wherein at least a portion of the transmitted energy is absorbed and thus dissipated by the energy-dissipating element (30), wherein the energy dissipation device (100) further comprises a response safeguard (32) for the energy-dissipating element (30) which interacts with the energy-dissipating element (30) such that after the response safeguard (32) has been triggered, at least one first fold (33) is formed peripherally at least partly around the periphery of the connecting body (31), wherein said first fold (33) serves as a trigger for the prescribing of the formation of the folds in the connecting body (31) upon the activation of the energy-dissipating element (30),
**characterized in that**
the response safeguard (32) comprises at least one traction element (32', 32") provided in the interior of the connecting body (31) which is connected to the connecting body (31) at least at two oppositely-positioned fixing points (F) and is designed to form the at least one first peripheral fold (33) in the connecting body (31) when an area (32") of the traction element (32) situated between the oppositely-positioned fixing points (32') is preferably centrically pushed by means of a manipulator (40) advanceable through the interior of the connecting body (31).

2. The energy dissipation device according to claim 1, wherein the response safeguard (32) is designed such that the amplitude of the at least one first fold (33) forming after the response safeguard (32) has been triggered, and thus the triggering force for the energy-dissipating element (30), is adjustable.

3. The energy dissipation device according to any one of the preceding claims, wherein
the at least one traction element (32', 32") provided in the interior of the connecting body (31) is non-positively connected to the inner wall of said connecting body (31) at two oppositely-positioned fixing points (F).

4. The energy dissipation device according to claim 1 or 2, wherein the at least one traction element (32', 32") provided in the interior of the connecting body (31) is non-positively connected to the outer wall of said connecting body (31) at two oppositely-positioned fixing points (F) and runs from the respective fixing points through openings correspondingly provided in the wall of the connecting body (31).

5. The energy dissipation device according to any one of the preceding claims, wherein the manipulator (40) advanceable within the connecting body (31) exhibits a mandrel which is displaceable relative the energy dissipation device (100) and in the longitu-dinal direction of same through a corresponding opening (11, 21) on the respective front end of the first and/or second force-transferring element (10, 20) and can be brought into non-positive contact with the area (M) situated between the oppositely-positioned fixing points (F).

6. The energy dissipation device according to any one of the preceding claims, wherein the connecting body (31) exhibits a tapering profile, preferably a profile tapering from the first force-transferring element (10) to the second force-transferring element (20).

7. The energy dissipation device according to any one of the preceding claims, particularly claim 4, wherein the connecting body (31) exhibits a canted profile, particularly in the shape of a truncated pyramid.

8. The energy dissipation device according to claim 7, in which at least one and preferably each edge (34) of the connecting body (31) exhibits a recess (35) situated in the area of the fold formed after the triggering of the response safeguard (32).

9. The energy dissipation device according to any one of the preceding claims, wherein the response safeguard (32) is arranged on the side of the energy-dissipating element (30) at which the first or the second force-transferring element (10, 20) is affixed.

10. The energy dissipation device according to any one of claims 1 to 8, wherein one response safeguard (32) respectively is arranged on each side of the energy-dissipating element (30).

11. The energy dissipation device according to any one of the preceding claims, wherein
the first force-transferring element (10) comprises a first flange designed to affix the energy dissipation device (100) to the main frame of a vehicle body of a multi-member vehicle, in particular a rail vehicle, and wherein the second force-transferring element (20) comprises a second flange and is designed to affix at least one upstream element such as a buffer element or other such similar energy-dissipating element to the energy dissipation device (100) via said second flange.

## Revendications

1. Dispositif d'absorption d'énergie pour véhicule composé de plusieurs unités, notamment un véhicule ferroviaire, avec un premier élément de transmission d'effort (10), un deuxième élément de transmission d'effort (20) et un élément d'absorption d'énergie (30) comportant un corps de liaison (31) sous la forme d'un corps creux qui s'étend dans la direction longitudinale du dispositif d'absorption d'énergie (100), les éléments de transmission d'effort (10, 20) étant reliés entre eux par adhérence au moyen de l'élément d'absorption d'énergie (30) de façon que les efforts en traction et en poussée puissent être transmis dans la direction longitudinale du dispositif d'absorption
d'énergie (100), les forces cheminant entièrement via le corps de liaison (31) lors de la transmission des efforts, l'élément d'absorption d'énergie (30) étant conçu de façon que, jusqu'à une quantité d'énergie définissable transmise par le flux de forces traversant le corps de liaison (31), les éléments de transmission d'effort (10, 20) sont agencés de manière sensiblement rigide l'un par rapport à l'autre, et que, en cas de dépassement de la quantité d'énergie définissable transmise par le flux de forces traversant le corps de liaison (31), les éléments de transmission d'effort (10, 20) sont déplacés l'un par rapport à l'autre dans la direction longitudinale du dispositif d'absorption d'énergie (100), au moins une partie de la quantité d'énergie transmise étant absorbée et dégradée par l'élément d'absorption d'énergie (30), le dispositif d'absorption d'énergie (100) présentant en outre un dispositif de sécurité
d'actionnement (32) pour l'élément d'absorption d'énergie (30), lequel dispositif de sécurité d'actionnement coopère avec l'élément d'absorption d'énergie (30) de telle sorte qu'après déclenchement du dispositif de sécurité d'actionnement (32), il se forme au moins un premier pli (33) qui s'étend dans la direction circonférentielle sur une partie au moins de la périphérie du corps de liaison (31), le premier pli (33) servant d'amorce pour prédéfinir la formation de plis sur le corps de liaison (31) lors du déclenchement de l'élément d'absorption d'énergie (30),
**caractérisé en ce que**
le dispositif de sécurité d'actionnement (32) comporte à l'intérieur du corps de liaison (31) au moins un élément de traction (32', 32") qui est relié au corps de liaison (31) en au moins deux points de fixation en regard (F) et qui est conçu pour former au moins un premier pli (33) qui s'étend dans la direction circonférentielle du corps de liaison (31) quand une zone (32") de l'élément de traction (32) située entre les points de fixation (32') en regard est enfoncée de préférence en son centre à l'aide d'un manipulateur (40) apte à être avancé à l'intérieur du corps de liaison (31).

2. Dispositif d'absorption d'énergie selon la revendication 1, **caractérisé en ce que** le dispositif de sécurité d'actionnement (32) est conçu de telle sorte que l'amplitude du ou des premiers plis (33) qui se forme(nt) après déclenchement du dispositif de sécurité d'actionnement (32) et, de ce fait, la force de déclenchement de l'élément d'absorption d'énergie (30) sont réglables.

3. Dispositif d'absorption d'énergie selon l'une quelconque des revendications précédentes, **caractérisé en ce que** le ou les éléments de traction (32', 32") prévus à l'intérieur du corps de liaison (31) sont reliés par adhérence à la paroi interne du corps de liaison (31) en deux points de fixation (F) en regard.

4. Dispositif d'absorption d'énergie selon la revendication 1 ou la revendication 2, **caractérisé en ce que** le ou les éléments de traction (32', 32") prévus à l'intérieur du corps de liaison (31) sont reliés par adhérence à la paroi externe du corps de liaison (31) en deux points de fixation (F) agencés en regard, et s'étendent depuis les points de fixation correspondants à travers des ouvertures adéquates ménagées dans la paroi du corps de liaison (31).

5. Dispositif d'absorption d'énergie selon l'une quelconque des revendications précédentes, **caractérisé en ce que** le manipulateur (40) apte à être avancé à l'intérieur du corps de liaison (31) présente un poinçon qui peut être déplacé relativement au dispositif d'absorption d'énergie (100) à travers une ouverture adéquate (11, 21) ménagée sur la face frontale correspondante du premier et/ou du second élément de transmission d'effort (10, 20) dans la direction longitudinale dudit dispositif d'absorption d'énergie (100), et qui peut être relié par adhérence à la région (M) située entre les points de fixation en regard (F).

6. Dispositif d'absorption d'énergie selon l'une quelconque des revendications précédentes, **caractérisé en ce que** le corps de liaison (31) affecte une forme effilée, se réduisant de préférence du premier élément de transmission d'effort (10) en direction du second élément de transmission d'effort (20).

7. Dispositif d'absorption d'énergie selon l'une quelconque des revendications précédentes, notamment la revendication 4, **caractérisé en ce que** le corps de liaison (31) affecte une forme à arêtes, notamment une forme de pyramide tronquée.

8. Dispositif d'absorption d'énergie selon la revendication 7, **caractérisé en ce qu'**au moins une et de préférence chaque arête (34) du corps de liaison (31) présente un évidement (35) situé dans la région de la formation du pli après déclenchement du dispositif de sécurité d'actionnement (32).

9. Dispositif d'absorption d'énergie selon l'une quelconque des revendications précédentes, **caractérisé en ce que** le dispositif de sécurité d'actionnement (32) est agencé sur le côté de l'élément d'absorption d'énergie (30) sur lequel est fixé le premier ou le second élément de transmission d'effort (10, 20).

10. Dispositif d'absorption d'énergie selon l'une quelconque des revendications 1 à 8, **caractérisé en ce qu'**il est prévu un dispositif de sécurité d'actionnement (32) sur chaque côté de l'élément d'absorption d'énergie (30).

11. Dispositif d'absorption d'énergie selon l'une quelconque des revendications précédentes, **caractérisé en ce que** le premier élément de transmission d'effort (10) présente une première bride qui est conçue pour fixer le dispositif d'absorption d'énergie (100) au châssis d'une caisse d'un véhicule composé de plusieurs unités, notamment un véhicule ferroviaire, et **en ce que** le second élément de transmission d'effort (20) présente une seconde bride et est conçu pour raccorder au dispositif d'absorption d'énergie (100), via la seconde bride, au moins un élément monté en amont, tel qu'un élément tampon ou un autre élément d'absorption d'énergie de ce type.
